# EUROPÄISCHE PATENTSCHRIFT

(11) **EP 1 208 569 B1**
(45) Veröffentlichungstag und Bekanntmachung des Hinweises auf die Patenterteilung: **11.07.2007**
(21) Anmeldenummer: 00962387.7
(22) Anmeldetag: 26.08.2000
(51) Int. Cl.: G21C 1/07, G21C 17/06, G21C 19/20

(54) **VERFAHREN ZUR ENTNAHME ABGEBRANNTER BRENNELEMENTE AUS EINEM KUGELHAUFEN-HOCHTEMPERATURREAKTOR**
METHOD FOR REMOVING SPENT FUEL ELEMENTS FROM A PEBBLE-BED HIGH-TEMPERATURE REACTOR
PROCEDE DE PRELEVEMENT D'ELEMENTS DE COMBUSTIBLE EPUISES A PARTIR D'UN REACTEUR HAUTE TEMPERATURE A LITS DE BOULETS

(30) Priorität: 02.09.1999 DE 19941719
(43) Veröffentlichungstag der Anmeldung: 29.05.2002
(73) Patentinhaber: Forschungszentrum Jülich GmbH, 52425 Jülich (DE)
(72) Erfinder: POHL, Peter, 52355 Düren (DE)
(74) Vertreter: Paul, Dieter-Alfred
(86) Internationale Anmeldenummer: PCT/EP2000/008320
(87) Internationale Veröffentlichungsnummer: WO 2001/018821

(56) Entgegenhaltungen:
- DE-A- 1 614 014
- DE-A- 1 938 836
- DE-B- 1 281 046
- CHRYSANTH MARNET, MANFRED WIMMERS, PETER POHL: "AVR Experience for Futrue HTGR Development" DEVELOPMENT STATUS OF MODULAR HTGRS AND THEIR FUTURE ROLE, PROCEEDINGS OF AN IAEA TECHNICAL COMMITTEE MEETING, 28. - 30. November 1994, Seiten 86-94, XP002154324 Petten, The Netherlands in der Anmeldung erwähnt

## Beschreibung

Die Erfindung betrifft ein Verfahren zur Entnahme abgebrannter Brennelemente aus einem Kugelhaufen-Hochtemperaturreaktor mit einem Reaktorkern und einem Kugelabzugsrohr, wobei die Brennelemente im Kreislauf umgewälzt und nach dem Austritt aus dem Kugelabzugsrohr einer Messung auf Gamma-Aktivität unterzogen werden und der hierbei gewonnene Meßwert in Relation zu vorher ermittelten Meßwerten gesetzt und danach entschieden wird, ob das Brennelement entnommen wird.

Beim Kugelhaufen-Hochtemperaturreaktor werden die kugelförmigen Brennelemente während des Reaktorbetriebs mehrfach umgewälzt. Dies bedeutet, daß die Brennelemente bei stationärem Betriebsablauf nacheinander aus dem Reaktorkern abgezogen und anschließend wieder auf ihn zurück befördert werden. Bei diesem Umwälzen wird jede einzelne Kugel nach ihrem Austritt aus dem Kugelabzugsrohr einer Abbrandmessung unterzogen, wobei zwischen Brennelementen und anderen Kugeln unterschieden und der Grad des Abbrandes bei den Brennelementen durch Messung einer hierfür charakteristischen Größe festgestellt wird. Liegt der Abbrandgrad unterhalb eines bestimmten Entnahmegrenzwertes, wird das betreffende Brennelement ausgesondert und entnommen. Die Entnahme schafft Platz für die Zugabe frischer Brennelemente.

Für die Abbrandmessung sind verschiedene Meßverfahren bekannt. Bei der Neutronentransmissionsmessung wird die Schwächung eines schnellen Neutronenstrahls beim Durchtritt durch das zu messende Brennelement erfaßt. Hier ist der Meßeffekt jedoch sehr klein und die Genauigkeit des Verfahrens unzureichend. Bei einem anderen Verfahren wurde ein Abbrandmeßreaktor benutzt, wobei das Maß für den Abbrand die Reaktivitätsänderung dieses Reaktors beim Durchtritt des zu messenden Brennelements durch seinen Kern war. Das Verfahren ist zwar relativ genau, aber sehr aufwendig.

Man ist deshalb später zu einem Verfahren übergegangen, bei dem eine gammaspektrometrische Messung mit flüssigstickstoffgekühltem Halbleiterdetektor vorgenommen wird. Das Maß für den Abbrand ist hierbei die Aktivität des Cs 137 im Brennelement. Dieses Verfahren ist heute die Methode der Wahl. Allerdings besteht das Problem der ausreichenden Meßgenauigkeit unter den Bedingungen der modernen modularen Hochtemperaturreaktor-Konzepte, bei denen die Umwälzgeschwindigkeit sehr hoch, das Kugelabzugsrohr kurz und deshalb die Abklingzeit der Brennelemente im Kugelabzugsrohr relativ klein ist.

Auf einem Symposium (IAEA Technical Committee Meeting in Petten, Niederlande, am 28. bis 30. November 1994) ist eine gegenüber der vorgenannten wesentlich einfachere Meßmethode vorgeschlagen worden, bei dem die totale Gamma-Aktivität eines Brennelements gemessen wird. Dabei wird der Meßwert mit dem momentanen Mittelwert zuvor erfaßter Meßwerte verglichen (vgl. den Bericht über dieses Symposion "DEVELOPMENT STATUS OF MODULAR HTGRs AND THEIR FUTURE ROLE, September 1995, Seite 90).

Die Beschreibung des Verfahrens in dem vorgenannten Dokument läßt offen, wie es im einzelnen auszugehen hat, damit es praktikabel durchgeführt werden kann. Der Erfindung liegt somit die Aufgabe zugrunde, ein verfahren, bei dem die totale Gamma-Aktivität der Brennelemente erfaßt wird, so zu gestalten, daß es für die Entnahme abgebrannter Brennelemente besonders geeignet ist.

Diese Aufgabe wird erfindungsgemäß dadurch gelöst, daß bei im wesentlichen stationärem Betriebsablauf auf der Basis einer bestimmten Anzahl von jeweils zurückliegenden Meßwerten eine verteilungskurve der Meßwerte erstellt und innerhalb dieser ein Entnahmegrenzwert für die Gamma-Aktivität auf einen solchen Wert festgelegt und dieser Wert bei nachfolgenden Messungen unter Berücksichtigung der dann jeweils in bestimmter Anzahl zurückliegenden Meßwerte so aktualisiert wird, daß der Entnahmeanteil der zu entnehmenden Brennelemente an dieser bestimmten Anzahl einem vorbestimmten Verhältnis entspricht. Grundgedanke der Erfindung ist es also, einen Entnahmegrenzwert jeweils anhand einer bestimmten Anzahl zurückliegender Meßwerte festzulegen und alle diejenigen Brennelemente zu entnehmen, die ein niedriges Gamma-Ergebnis und damit einen höheren Abrand aufweisen als durch den Entnahmegrenzwert festgelegt. Die Festlegung erfolgt dabei in der Weise, daß immer ein bestimmter Anteil der Brennelemente von derjenigen Menge an Brennelementen entnommen wird, die der bestimnten Anzahl entspricht, welche für die Festlegung des Entnahmegrenzwertes herangezogen worden ist. Ein in Frage kommender Entnahmeanteil ist beispielsweise 10 %, d.h. bei einer bestimmten Anzahl von 300 werden 30 entnommen.

In Ausbildung der Erfindung ist vorgesehen, daß der Entnahmegrenzwert nach jedem Meßwert eines Brennelementes neu festgelegt wird, damit er besonders aktuell ist. Dabei sollte für die Festlegung des Entnahmegrenzwertes die lückenlose Anzahl der jeweils zuletzt gewonnenen Meßwerte herangezogen werden.

In weiterer Ausgestaltung der Erfindung ist vorgeschlagen, daß die Meßwerte in Ergebnisklassen eingruppiert und in einen Rechner eingespeichert werden und daß anhand der Ergebnisklassen die Verteilungskurve erstellt wird, die von dem Entnahmegrenzwert unterteilt wird. Dieses verfahren ist besonders an die rechnerische Erfassung der Meßwerte angepaßt.

Die Anzahl der Meßwerte für die Ermittlung des jeweiligen Entnahmegrenzwertes sollte vorzugsweise zwischen 100 und 1000 liegen, damit eine hinreichende Anzahl zur Ermittlung der Verteilungskurve bzw. zur Festlegung des Entnahmegrenzwertes vorhanden ist.

Bei der Anwendung des vorstehenden Verfahrens besteht die Gefahr, daß weniger abgebrannte Brennelemente entnommen werden, wenn es zu vorübergehenden, starken Abweichungen vom stationären Betriebsablauf kommt, wie beispielsweise einer Reaktorabschaltung oder einer Unterbrechung des Kugelwälzens bei weiter betriebenem Reaktor. Um dies zu vermeiden, wird nach der Wiederaufnahme des Umwälzens der Brennelemente die Entnahme der Brennelemente in einer Übergangsphase solange eingeschränkt oder eingestellt, bis ein neuer Entnahmegrenzwert unter Löschung des alten Entnahmegrenzwertes auf der Basis einer vorbestimmten Anzahl von jeweils zurückliegenden Meßwerten und anhand der sich dann ergebenden Verteilungskurve der Meßwerte festlegbar ist, und daß die Entnahme anschließend auf der Basis des neuen Entnahmegrenzwertes wieder aufgenommen wird, wobei nach dem vollständigen Durchwälzen der Brennelemente im Kugelabzugsrohr vorübergehend ein gegenüber dem normalen Entnahmeanteil, wie er sich bei im wesentlichen stationärem Betriebsablauf ergibt, erhöhter Entnahmeanteil festgelegt wird, und daß erst wieder zu dem normalen Entnahmeanteil zurückgekehrt wird, wenn die Einschränkung oder Einstellung der Entnahme in der Übergangsphase ausgeglichen ist.

Grundgedanke der Erfindung ist es also, nach Wiederaufnahme des Umwälzbetriebs die Entnahme der Brennelemente einzuschränken oder sogar vollständig einzustellen, bis eine neue Meßwertverteilung hinreichend erkennbar ist, z.B. nach mindestens 50 Meßwerten. Dies beruht auf der Erkenntnis, daß die Meßergebnisse nach der Wiederaufnahme des Betriebs zunächst deutlich kleiner sind, weil die Gamma-Aktivität der Brennelemente während der Phase der Betriebsabweichung erheblich mehr abgeklungen ist als im stationären Betriebsablauf. Auf der Basis der neuen Meßwerte ergibt sich hierdurch eine zu niedrigeren Meßwerten verschobene verteilungskurve. Bleibe der vom vorangegangenen stationären Betriebsablauf stammende Entnahmegrenzwert bestehen, hätte dies zur Folge, daß der Entnahmeanteil zu hoch ist und damit auch verhältnismäßig niedrig abgebrannte Brennelemente entnommen würden.

Nach erstmaliger Ermittlung des neuen Entnahmegrenzwertes wird die Entnahme in normalem Umfang wieder aufgenommen, d.h. unter Verwendung des auch schon bei stationärem Betrieb vorgesehenen Entnahmeanteils. Der neue Entnahmegrenzwert wird dann in der gleichen Weise immer wieder aktualisiert, wie bei dem Verfahren für den stationären Betrieb angegeben.

In der Zeichnung sind verschiedene Phasen des erfindungsgemäßen Verfahrens graphisch dargestellt, wobei jeweils verteilungskurven gezeigt sind, die sich aus der Einordnung der einzelnen Gammameßwerte in Ergebnisklassen und ihrer Häufigkeit ergeben. Dabei zeigen
- Figur 1: die Verteilungskurve bei stationärem Betriebsablauf;
- Figur 2: eine verteilungskurve nach einer starken Betriebsabweichung und Wiederaufnahme des Kugelumwälzens;
- Figur 3: eine Verteilungskurve, wie sie sich zu einem späteren Zeitpunkt des Durchwälzens der Brennelemente ergibt;
- Figur 4: eine Verteilungskurve, wie sie sich in der Endphase des Durchwälzens der Brennelemente ergibt.

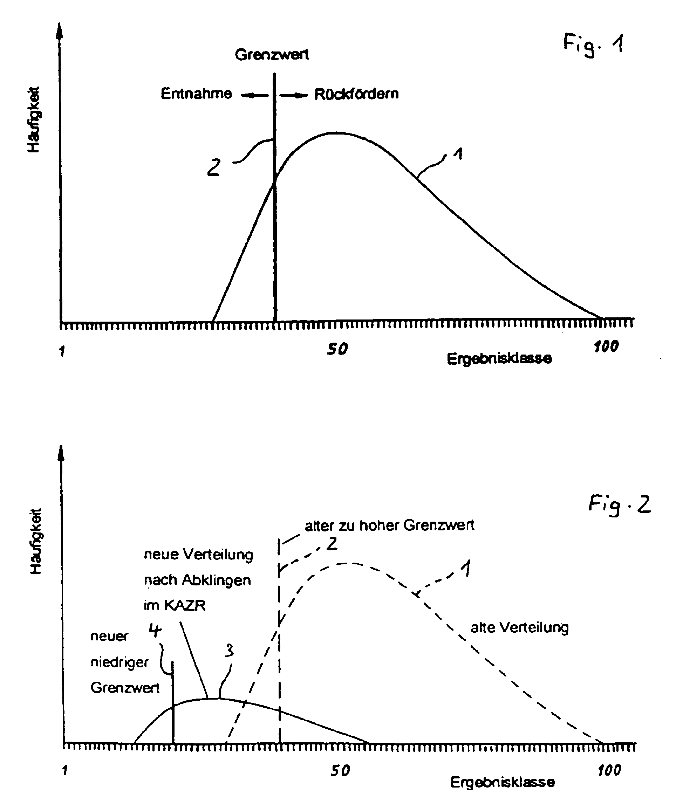

Die in Figur 1 dargestellte erste Verteilungskurve 1 repräsentiert die Meßwertverteilung bei normalem, stationärem Betriebsablauf. Dabei werden die Meßwerte nacheinander in diskrete Ergebnisklassen eingruppiert, wobei sich der Kurvenverlauf durch die Häufigkeit des Auftretens einer bestimmten Anzahl von Meßwerten innerhalb der Ergebnisklassen ergibt. Die für die Verteilungskurve herangezogene Anzahl von Meßwerten liegt zwischen 100 und 1.000, z. B. bei 300, und ist vorbestimmt, d. h. konstant.

Die Verteilungskurve 1 ist durch einen Entnahmegrenzwert 2 unterteilt. Dieser Entnahmegrenzwert 2 wird jeweils aktuell, d. h. nach der Vermessung jedes Brennelements, anhand der sich dann ergebenden Verteilungskurve ermittelt, wobei die lückenlose Anzahl der jeweils zuletzt gewonnenen Meßwerte herangezogen wird. Der Entnahmegrenzwert 2 wird dann jeweils so festgelegt, daß von der Anzahl der jeweils für die Verteilungskurve herangezogenen Meßwerte ein fest vorgegebener Entnahmeanteil, z. B. 10 %, abgetrennt wird. Diejenigen Brennelemente, die eine Gamma-Aktivität unterhalb des ersten Entnahmegrenzwertes 2 haben, werden aus dem Kugelumwälzkreislauf herausgenommen, um Platz für frische Brennelemente zu machen, während die übrigen Brennelemente innerhalb des Umwälzkreislaufes wieder auf den Reaktorkern zurückgefördert werden.

Bei einer starken Abweichung vom stationären Betriebsablauf, beispielsweise durch Reaktorabschaltung oder Störungen im Kugelumwälzkreislauf, kommt es zu einer Unterbrechung des Kugelumwälzens. Dies hat zur Folge, daß die Gamma-Aktivität der im Kugelabzugsrohr (KAZR) befindlichen Brennelemente abklingt. Wird das Kugelumwälzen nach Beseitigung der Störung bzw. Betriebsabweichung wieder aufgenommen, um zu einem stationären Betriebsablauf zu kommen, werden von den dann zunächst aus dem Kugelabzugsrohr kommenden Brennelementen erheblich geringere Meßwerte der Gamma-Aktivität erhalten, d.h. die Gamma-Aktivität steht jetzt in einem anderen Verhältnis zum Abbrand der Brennelemente. Aufgrund der Messung der Gamma-Aktivität dieser Brennelemente ergibt sich eine neue, zu niedrigeren Werten hin verschobene, zweite Verteilungskurve 3, wie sie sich aus der durchgezogenen Linie in Figur 2 ersehen läßt. Die erste Verteilungskurve 1 und der zugehörige Grenzwert 2 ist in dieser Graphik gestrichelt dargestellt, da sie beide vor Wiederaufnahme des Kugelumwälzens gelöscht worden sind. Die Graphik gemäß Figur 2 läßt erkennen, daß bei Beibehaltung der Ermittlungsmethode für den ersten Entnahmegrenzwert 2 ein Großteil der Brennelemente und damit auch solche, die nur wenig abgebrannt sind, ausgesondert würden. Damit dies nicht geschieht, wird die Entnahme der Brennelemente nach Wiederaufnahme des Kugelumwälzens zunächst eingeschränkt oder völlig eingestellt.

Erst wenn eine hinreichende Anzahl von Brennelementen vermessen worden ist, so daß eine neue Verteilungskurve erstellt werden kann, wie sie sich als zweite Verteilungskurve 3 in Figur 2 darstellt, wird ein neuer, zweiter Entnahmegrenzwert 4 festgelegt, wobei die Festlegung so erfolgt, daß der Entnahmeanteil demjenigen bei stationärem Betrieb entspricht. Die Aktualisierung des Entnahmegrenzwertes 4 geschieht in der gleichen Weise wie bei stationärem Betrieb nach jeder Einzelmessung. Gleichzeitig wird die Entnahme der abgebrannten Brennelemente unter Anwendung des neuen, zweiten Entnahmegrenzwertes 4 wieder aufgenommen.

Im weiteren Verlauf baut sich die zweite Verteilungskurve 3 durch die Messung der Gamma-Aktivität weiterer Brennelemente bis zur gewünschten Vergleichszahl, z. B. 300, weiter auf und bleibt in dieser Form im wesentlichen noch so lange bestehen, wie nur stärker abgeklungene Brennelemente aus dem Kugelabzugsrohr am Meßort erfaßt werden. Die Aktualisierung des zweiten Entnahmegrenzwertes 4 wird dabei fortgesetzt.

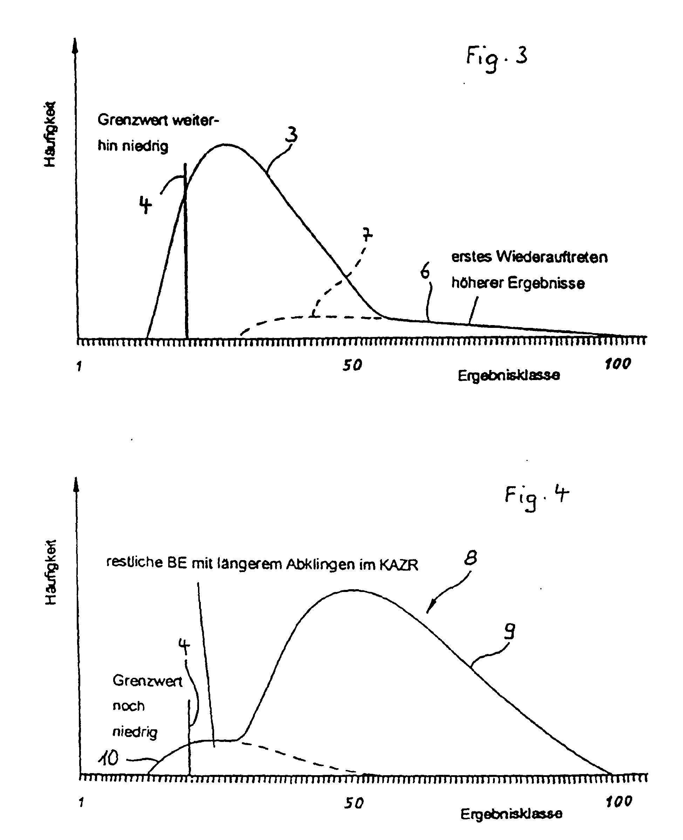

In Figur 3 ist die zweite Verteilungskurve 3 schon zu höheren Ergebnisklassen ausgedehnt. Der Grund hierfür ist, daß am Meßort nunmehr auch vereinzelt Brennelemente auftauchen, die aus der Übergangszone Reaktorkern/Kugelabzugsrohr stammen und deren Gamma-Aktivität durch die Betriebsabweichung kaum oder gar nicht beeinflußt und somit wieder deutlich höher ist. Die Formgebung der zweiten Verteilungskurve 3 kann als Überlagerung von zwei Teilverteilungen angesehen werden, und zwar mit einer ersten Teilverteilung, die im wesentlichen der zweiten Verteilungskurve 3 entspricht und die auf stärker abgeklungenen Brennelementen beruht, und einer zweiten Teilverteilung, die sich in der durch Figur 3 dargestellten Phase langsam aufbaut und durch den Schenkel 6 repräsentiert wird. Dieser Schenkel 6 setzt sich nach links in einer gestrichelten Linie 7 fort. Hierdurch wird angezeigt, daß sich beide Teilverteilungen überschneiden.

Beim Auftauchen der Brennelemente aus der Übergangszone Reaktorkern/Kugelabzugsrohr wird die Aktualisierung des Entnahmegrenzwertes 4 abgebrochen, d. h. er wird auf dem letzten Stand fixiert. Auf diese Weise wird vermieden, daß sich der Entnahmegrenzwert 4 durch die Brennelemente aus der Übergangszone, welche nicht mehr stärker abgeklungen sind, zu höheren Werten verschiebt und auf diese Weise Brennelemente mit noch unzureichendem Abbrand entnommen werden.

Im weiteren Verlauf nimmt der Anteil der nicht stärker abgeklungenen Brennelemente immer weiter zu, so daß sich in der letzten Phase eine dritte Verteilungskurve 8 ergibt, wie sie aus Figur 4 zu ersehen ist. Diese verteilungskurve 8 hat sich in ihrem rechten Abschnitt 9 aus dem Schenkel 6 und der Linie 7 aufgebaut. Der linke Abschnitt 10 der dritten Verteilungskurve 8 beruht noch auf Messungen von stärker abgeklungenen Brennelementen. Dabei bleibt für die Entnahme der zweite Entnahmegrenzwert 4 solange fixiert, bis der gesamte Inhalt des Kugelabzugsrohrs einschließlich der vorerwähnten Übergangszone durchgewälzt ist und demnach nur noch neu bestrahlte Brennelemente im Falle der Reaktorabschaltung oder im Reaktorkern nicht abgeklungene Brennelemente bei Reaktorbetrieb mit unterbrochenem Kugelumwälzen am Meßort erscheinen.

Erst wenn sichergestellt ist, daß der gesamte Inhalt des Kugelabzugsrohrs durchgewälzt ist und keine stärker abgeklungenen Brennelemente mehr am Meßort erscheinen, wird der Entnahmegrenzwert wieder hochgesetzt. Dies geschieht durch Wiederanwendung der Aktualisierung im vorbeschriebenen Sinn anhand der dann vorhandenen Verteilungskurve. Dabei wird vorübergehend ein etwas erhöhter Entnahmeanteil vorgegeben, z. B. 12 % statt des normalen Entnahmeanteils von 10 %. Dieser Entnahmeanteil wird solange beibehalten, bis die eingeschränkte oder eingestellte Entnahme in den Übergangsphasen nach Wiederaufnahme des Kugelumwälzens wieder ausgeglichen ist. Anschließend wird wieder auf den normalen Entnahmeanteil zurückgegangen, so daß sich die in Figur 1 dargestellten Verhältnisse ergeben.

## Patentansprüche

1. Verfahren zur Entnahme abgebrannter Brennelemente aus einem Kugelhaufen-Hochtemperaturreaktor mit einem Reaktorkern und einem Kugelabzugsrohr, wobei die Brennelemente im Kreislauf umgewälzt und nach dem Austritt aus einem Kugelabzugsrohr einer Messung auf Gamma-Aktivität unterzogen werden und der hierbei gewonnene Meßwert in Relation zu vorher ermittelten Werten gesetzt und danach entschieden wird, ob das Brennelement entnommen wird, **dadurch gekennzeichnet, daß** bei im wesentlichen stationärem Betriebsablauf auf der Basis einer vorbestimmten Anzahl von jeweils zurückliegenden Meßwerten eine Verteilungskurve (1, 3, 9) der Meßwerte erstellt und innerhalb dieser ein Entnahmegrenzwert (2, 4) für die Gamma-Aktivität auf einen solchen Wert festgelegt und dieser Wert bei nachfolgenden Messungen unter Berücksichtigung der dann jeweils in bestimmter Anzahl zurückliegenden Meßwerte so aktualisiert wird, daß der Entnahmeanteil der zu entnehmenden Brennelemente an dieser Anzahl einem vorbestimmten Verhältnis entspricht.

2. Verfahren nach Anspruch 1, **dadurch gekennzeichnet, daß** der Entnahmegrenzwert (2, 4) nach jedem Meßwert eines Brennelements neu festgelegt wird.

3. Verfahren nach Anspruch 1 oder 2, **dadurch gekennzeichnet, daß** für die Festlegung des Entnahmegrenzwertes (2, 4) die lückenlose Anzahl der jeweils zuletzt gewonnenen Meßwerte herangezogen wird.

4. Verfahren nach einem der Ansprüche 1 bis 3, **dadurch gekennzeichnet, daß** die Meßwerte in Ergebnisklassen eingruppiert und in einem Rechner eingespeichert werden und daß anhand der Ergebnisklassen die Verteilungskurve (1, 3, 8) erstellt wird, die von dem Entnahmegrenzwert (2, 4) unterteilt wird.

5. Verfahren nach einem der Ansprüche 1 bis 4, **dadurch gekennzeichnet, daß** die Anzahl der Meßwerte für die Ermittlung des jeweiligen Entnahmegrenzwertes (2, 4) zwischen 100 und 1000 liegt.

6. Verfahren nach einem der Ansprüche 1 bis 5, **dadurch gekennzeichnet, daß** nach einer starken Betriebsabweichung vom stationären Betriebsablauf, wie beispielsweise einer Reaktorabschaltung oder Unterbrechung des Kugelumwälzens, und nach Wiederaufnahme des Umwälzens die Entnahme der Brennelemente in einer Übergangsphase solange eingeschränkt oder eingestellt wird, bis ein neuer Entnahmegrenzwert (4) unter Löschung des alten Entnahmegrenzwertes (2) auf der Basis einer vorbestimmten Anzahl von jeweils zurückliegenden Meßwerten und aufgrund der sich dann ergebenden Verteilungskurve (3) der Meßwerte festgelegt ist, und daß die Entnahme anschließend auf der Basis des neuen Entnahmegrenzwertes (4) wieder aufgenommen wird, wobei nach dem vollständigen Durchwälzen des Inhalts des Kugelabzugsrohrs vorübergehend ein gegenüber dem normalen Entnahmeanteil, wie er sich bei im wesentlichen stationärem Betriebsablauf ergibt, erhöhter Entnahmeanteil festgelegt wird, und daß erst wieder zum normalen Entnahmeanteil zurückgekehrt wird, wenn die Einschränkung oder Einstellung der Entnahme in der Übergangsphase ausgeglichen ist.

7. Verfahren nach Anspruch 6, **dadurch gekennzeichnet, daß** der neue Entnahmegrenzwert (4) auf der Basis von wenigstens 50 Meßwerten festgelegt wird.

## Claims

1. Process for the withdrawal of spent fuel elements from a pebble bed high temperature reactor including a reactor core and a pebble withdrawal pipe wherein the fuel elements are circulated and after their withdrawal from the pebble withdrawal pipe are subjected to a measurement of gamma activity and the measured value obtained thereby is related to previously measured values and in accordance with which it is decided whether the fuel element is withdrawn, **characterised in that** in substantially steady state operating conditions on the basis of a specific number of previously measured values a distribution curve (3, 9) of measured values is generated and within this a withdrawal threshold value (2,4) for the gamma activity is set to such a value and this value is updated by following measurements taking into account a specific number of the measured values preceding then respectively so that the withdrawal proportion of the fuel elements to be withdrawn in relation to this specific number corresponds to a predetermined ratio.

2. Process according to claim 1, **characterised in that** the withdrawal threshold value (2,4) is newly fixed after each measuring value of a fuel element.

3. Process according to claim 1 or 2, **characterised in that** for determining the withdrawal threshold value (2,4) in each case an uninterrupted number of the immediately preceding measuring data obtained are used as a basis.

4. Process according to any one of claims 1 to 3, **characterised in that** the measuring data are sorted into result classes and are stored in a computer and that on the basis of the result classes the distribution curve (1, 3, 8) is generated which is sub-divided by the withdrawal threshold value (2,4).

5. Process according to any one of claims 1 to 4, **characterised in that** the number of measuring data for determining each particular withdrawal threshold value (2,4) is between 100 and 1000.

6. Process according to any one of claims 1 to 5, **characterised in that** after a large deviation from the steady state operating condition such as for example shutting down of the reactor or an interruption of the pebble bed circulation, and after the resumption of the re-circulation of the fuel elements the withdrawal of fuel elements is restricted or discontinued during a transitional phase until a new withdrawal threshold value (4) cancelling the old withdrawal threshold value (2) has been fixed on the basis of a specific number of measured values preceding respectively and on the basis of the then arising distribution curve (3) of the measured values and that the withdrawal thereafter is resumed on the basis of the new withdrawal threshold value (4), wherein after a complete re-circulation of the contents of the pebble withdrawal pipe an increased withdrawal proportion above the normal value that results from a substantially steady state operating condition is temporarly fixed and that the normal withdrawal proportion is only resumed again once the limiting or discontinuation of the withdrawal during the transitional phase has been balanced out.

7. Process according to claim 6, **characterised in that** the new withdrawal threshold value (4) is fixed on the basis of at least 50 measured values.

## Revendications

1. Procédé de prélèvement d'éléments de combustible épuisés, à partir d'un réacteur haute température à lits de boulets muni d'un coeur de réacteur et d'une tubulure d'extraction de boulets, les éléments de combustible étant mis en circuit et étant soumis à une mesure de l'activité gamma après être sortis d'une tubulure d'extraction de boulets, et la valeur mesurée ainsi obtenue étant mise en relation avec des valeurs préalablement établies, après quoi il est décidé si l'élément de combustible est prélevé, **caractérisé par le fait qu'**une courbe de répartition (1, 3, 9) des valeurs mesurées est instaurée en cas de déroulement fonctionnel sensiblement stationnaire, sur la base d'un nombre prédéterminé de valeurs mesurées respectivement précédentes ; et, au sein desdites valeurs mesurées, une valeur limite de prélèvement (2, 4) relative à l'activité gamma est consignée sur une telle valeur, puis cette valeur est actualisée au cours de mesures successives, en prenant en compte les valeurs mesurées respectivement précédentes en nombre déterminé, de telle sorte que la part des éléments de combustible à prélever corresponde, selon ce nombre, à un rapport prédéterminé.

2. Procédé selon la revendication 1, **caractérisé par le fait que** la valeur limite de prélèvement (2, 4) est consignée de nouveau d'après chaque valeur mesurée d'un élément de combustible.

3. Procédé selon la revendication 1 ou 2, **caractérisé par le fait que** le nombre complet des valeurs mesurées respectivement obtenues en dernier lieu est utilisé pour la consignation de la valeur limite de prélèvement (2, 4).

4. Procédé selon l'une des revendications 1 à 3, **caractérisé par le fait que** les valeurs mesurées sont groupées en des classes de résultats et sont mémorisées dans un ordinateur ; et **par le fait que** la courbe de répartition (1, 3, 8), scindée par la valeur limite de prélèvement (2, 4), est instaurée sur la base desdites classes de résultats.

5. Procédé selon l'une des revendications 1 à 4, **caractérisé par le fait que** le nombre des valeurs mesurées, pour l'établissement de la valeur limite respective de prélèvement (2, 4), se situe entre 100 et 1 000.

6. Procédé selon l'une des revendications 1 à 5, **caractérisé par le fait que**, après un écart fonctionnel accentué vis-à-vis du déroulement fonctionnel stationnaire, comme par exemple une mise à l'arrêt du réacteur ou une interruption du brassage des boulets, et après reprise dudit brassage, le prélèvement des éléments de combustible est restreint ou stoppé, lors d'une phase transitoire, jusqu'à la consignation d'une nouvelle valeur limite de prélèvement (4) avec effacement de l'ancienne valeur limite de prélèvement (2), sur la base d'un nombre prédéterminé de valeurs mesurées respectivement précédentes, et en se fondant sur la courbe de répartition (3) des valeurs mesurées qui en résulte alors ; **par le fait que** le prélèvement est ensuite repris sur la base de la nouvelle valeur limite de prélèvement (4), sachant qu'il est procédé, après le brassage intégral du contenu de la tubulure d'extraction de boulets, à la consignation provisoire d'une part prélevée accrue vis-à-vis de la part prélevée normale résultant d'un déroulement fonctionnel sensiblement stationnaire ; et **par le fait qu'**un nouveau retour à la part prélevée normale a lieu uniquement lorsque la restriction ou l'arrêt du prélèvement est équilibré(e) durant la phase transitoire.

7. Procédé selon la revendication 6, **caractérisé par le fait que** la nouvelle valeur limite de prélèvement (4) est consignée sur la base d'au moins 50 valeurs mesurées.
